# EUROPEAN PATENT SPECIFICATION

(11) **EP 3 046 014 B1**
(45) Date of publication and mention of the grant of the patent: **28.02.2018**
(21) Application number: 16151960.8
(22) Date of filing: 19.01.2016
(51) Int. Cl.: G06F 3/0482, G06F 3/0488, G06F 3/0485

(54) **METHOD AND ELECTRONIC DEVICE FOR ITEM MANAGEMENT**
VERFAHREN UND ELEKTRONISCHE VORRICHTUNG ZUR ARTIKELVERWALTUNG
PROCÉDÉ ET DISPOSITIF ÉLECTRONIQUE DE GESTION D'ARTICLE

(30) Priority: 19.01.2015 KR 20150008873
(43) Date of publication of application: 20.07.2016
(73) Proprietor: Samsung Electronics Co., Ltd., Gyeonggi-do 16677 (KR)
(72) Inventor: CHOI, Kyoungmook, Gyeonggi-do (KR); KWON, Hyukdon, Gyeonggi-do (KR); LEE, Sangwoo, Gyeonggi-do (KR)
(74) Representative: HGF Limited

(56) References cited:
- US-A1- 2008 256 454
- US-A1- 2010 281 374
- US-A1- 2011 010 672
- US-A1- 2013 024 821

## Description

### BACKGROUND

### 1. Field of the Disclosure

The present disclosure generally relates to an item management method and electronic device for sorting items into groups.

### 2. Description of the Related Art

Due to the growth of electronic communication industries, user devices (e.g., smartphones or tablet computers, etc.) are becoming necessities to modern society for delivery of fast changing information. These devices are convenient to use through a Graphical User Interface (GUI) environment using a display screen and provide various multimedia based on content from the web.

The user devices may store various content items such as music or photographs, etc., and store more content in accordance with users' taste or preferences. Item management methods support a scheme of sorting items into several groups having designated names.

The conventional item management method selects one or more items to move and then selects a group for accepting the items. In case there are many items, a user has difficulty in choosing items to move to a specific group.

US 2013 024821 discloses a method for moving or copying displayed items in response to at least one touch event on a touch screen is provided, wherein the method comprises: detecting a user selection of one or more items; displaying an object corresponding to the one or more selected items at a predetermined location; moving the object to a point selected by the user; and moving the selected one or more items in association with the object.

US 2008/256454 discloses a method to perform selection of a list item using an invariant selection location, which includes retrieving multiple data items to present for selection by a user.

### SUMMARY

The present disclosure has been made to address at least the problems and disadvantages described above and to provide at least the advantages described below.

Accordingly, an aspect of the present disclosure provides an item management method and electronic device for making it easy to sort many items into a desired group, decreasing the time consumed for sorting the items.

In accordance with an aspect of the present disclosure, an item management method of an electronic device is provided in accordance with claim 1. In accordance with another aspect of the present disclosure, an electronic device is provided in accordance with claim 9.

### BRIEF DESCRIPTION OF THE DRAWINGS

The above and other aspects, features and advantages of the present disclosure will become more apparent from the following detailed description when taken in conjunction with the accompanying drawings in which:
FIG. 1 is a block diagram illustrating a construction of an electronic device supporting an item sorting function according to an embodiment of the present disclosure;
FIG. 2 is a block diagram illustrating a construction of a controller according to an embodiment of the present disclosure;
FIG. 3 is a flowchart illustrating an operation of an item sorting method of an electronic device according to an embodiment of the present disclosure;
FIGS. 4 and 5 are diagrams for illustrating an item sorting method according to various embodiments of the present disclosure;
FIG. 6 is a flowchart illustrating an operation of displaying one or more items and one or more groups on a screen in FIG. 3 according to various embodiments of the present disclosure;
FIGS. 7 to 9 are screen shots illustrating an operation for displaying one or more items and one or more groups according to various embodiments of the present disclosure;
FIG. 10 is a flowchart illustrating an operation of displaying one or more items and one or more groups on a screen in FIG. 3 according to various embodiments of the present disclosure;
FIG. 11 is a screen shot illustrating an operation for displaying one or more items and one or more groups according to various embodiments of the present disclosure;
FIG. 12 is a flowchart illustrating an operation of displaying one or more items and one or more groups on a screen in FIG. 3 according to various embodiments of the present disclosure;
FIG. 13 is a screen shot illustrating an operation for displaying one or more items and one or more groups according to various embodiments of the present disclosure;
FIG. 14 is a flowchart illustrating an operation of displaying one or more items and one or more groups on a screen in FIG. 3 according to various embodiments of the present disclosure;
FIG. 15 is a screen shot illustrating an operation for displaying one or more items and one or more groups according to various embodiments of the present disclosure;
FIG. 16 is a flowchart illustrating an operation of displaying one or more items and one or more groups on a screen in FIG. 3 according to various embodiments of the present disclosure;
FIG. 17 is a screen shot illustrating an operation of displaying one or more items and one or more groups according to various embodiments of the present disclosure;
FIG. 18 is a flowchart illustrating an operation of adding at least one item deleted from a screen to a selected group in FIG. 3 according to various embodiments of the present disclosure;
FIG. 19 is a flowchart illustrating an operation of adding at least one item deleted from a screen to a selected group in FIG. 3 according to various embodiments of the present disclosure;
FIG. 20 is a screen shot illustrating an operation for adding at least one item deleted from a screen to a selected group according to various embodiments of the present disclosure;
FIG. 21 is a flowchart illustrating an item sorting method of an electronic device according to various embodiments of the present disclosure;
FIG. 22 is a diagram illustrating an item sorting method according to various embodiments of the present disclosure;
FIG. 23 is a flowchart illustrating an item sorting method of an electronic device according to various embodiments of the present disclosure; and
FIG. 24 is a diagram illustrating an item sorting method according to various embodiments of the present disclosure.

### DETAILED DESCRIPTION

Various embodiments of the present disclosure will be described herein with reference to the accompanying drawings, in which like reference numbers are used to depict the same or similar elements, features, and structures. Various modifications and changes to the embodiments of the present invention may be made without departing from the scope of the present disclosure. Specific embodiments are illustrated in the drawings and a related detailed description is provided. However, the embodiments described herein do not limit the present disclosure to a specific embodiment, and should be understood as including all modifications within the technical scope of the present disclosure.

The expressions "comprise" and "may comprise" as used herein indicate the existence of disclosed corresponding functions, operations, or constituent elements, etc. and do not limit additional functions, operations, or constituent elements, etc. Also, the terms "comprise" and "have" should be understood to designate the existence of features stated in the specification, numerals, steps, operations, constituent elements, components or a combination thereof, and not excluding the possibility of the existence or addition of one or more other features, numerals, steps, operations, constituent elements, components or combinations thereof.

As used herein, the term "or" includes any and all combinations of words enumerated together. For example, "A or B" may include A, or may include B, or may include A and B.

The terms "1st", "2nd", "first" or "second", etc. as used herein may modify various constituent elements, but do not limit corresponding constituent elements. For example, the expressions do not limit the order and/or importance of the corresponding constituent elements. The expressions may be used to distinguish one constituent element from another constituent element. For example, both a first user device and a second user device are user devices and represent user devices different from one another. For example, a first constituent element may be referred to as a second constituent element without departing from the scope of the present disclosure. Likewise, a second constituent element may be referred to as a first constituent element.

When a constituent element is "connected" to or "accessed" by another constituent element, it is understood that the first constituent element may not only be directly connected to or accessed by the second constituent element, but also a new third constituent element may exist between the first constituent element and the second constituent element. On the other hand, when a constituent element is "directly connected" to or "directly accessed" by another constituent element, it is understood that no third constituent element exists between the first constituent element and the second constituent element.

The terms used herein are used merely to explain embodiments of the present disclosure, and do not limit the various embodiments of the present disclosure.

An expression of a singular number includes the expression of a plural number unless the context clearly dictates otherwise.

Unless defined otherwise, all terms used herein, including technical or scientific terms, have the same meaning as those commonly understood by a person having ordinary knowledge in the art to which the present disclosure belongs. Terms as defined in a general dictionary should be interpreted as having meanings consistent with the contextual meanings of a related technology, and should not be interpreted as having ideal or excessively formal meanings unless explicitly defined herein.

An electronic device according to an embodiment of the present disclosure may be a device including a display function. For example, the electronic device may include at least one of a smart phone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MPEG Audio Layer 3 (MP3) player, a mobile medical instrument, a camera, or a wearable device (e.g., a Head-Mounted Device (HMD) such as electronic glasses, electronic clothes, an electronic bracelet, an electronic necklace, an electronic appcessory, an electronic tattoo, or a smart watch).

According to an embodiment of the present disclosure, the electronic device may be a smart home appliance having a display function. The smart home appliance, for example, the electronic device may include at least one of a television, a Digital Video Disk (DVD) player, an audio system, a refrigerator, an air conditioner, a cleaner, an oven, a microwave, a washing machine, an air cleaner, a set-top box, a TV box (for example, Samsung HomeSync™, Apple TV™, or Google TV™), a game console, an electronic dictionary, an electronic locking system, a camcorder, or an electronic picture frame.

According to an embodiment of the present disclosure, the electronic device may include at least one of various medical instruments (e.g., Magnetic Resonance Angiography (MRA) machine, Magnetic Resonance Imaging (MRI) machine, Computerized Tomography (CT) machine, a moving camera, an ultrasonic machine, etc.), a navigation device, a Global Positioning System (GPS) receiver, an Event Data Recorder (EDR), a Flight Data Recorder (FDR), a car infotainment device, an electronic equipment for ship (e.g., a navigation device for a ship and a gyrocompass, etc.), avionics, a security instrument, a head unit for vehicles, an industrial or home service robot, an Automatic Teller Machine (ATM), or a Point Of Sales (POS) machine.

According to an embodiment of the present disclosure, the electronic device may include at least one of a part of furniture or building/structure including a display function, an electronic board, an electronic signature receiving device, a projector, or various metering instruments (e.g., tap water, electricity, gas, or radio wave metering instrument, etc.).

The electronic device according to an embodiment of the present disclosure may be one of the aforementioned various devices or a combination of two or more of them. Also, the electronic device according to an embodiment of the present disclosure may be a flexible device. Also, the electronic device according to an embodiment of the present disclosure is not limited to the aforementioned instruments.

The term 'user' as used herein may denote a person who uses the electronic device or a device (e.g., an artificial-intelligence electronic device) which uses the electronic device.

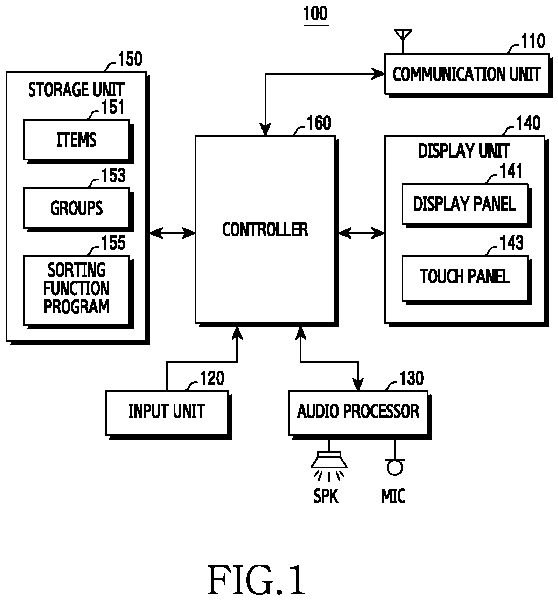

FIG. 1 is a block diagram illustrating a construction of an electronic device supporting an item sorting function according to an embodiment of the present disclosure.

Referring to FIG. 1, the electronic device 100 according to an embodiment of the present disclosure includes a communication unit 110, an input unit 120, an audio processor 130, a display unit 140, a storage unit 150, and a controller 160.

The electronic device 100 according to an embodiment of the present disclosure may display one or more items and one or more groups stored in the storage unit 150 in accordance with a user input. The electronic device 100 according to an embodiment of the present disclosure may support selecting one group among at least one or more groups in accordance with a user input, and add or move at least one item among one or more items to the selected group.

According to an embodiment of the present disclosure, selecting a target item to add to a selected group among one or more items may be selected by various methods. For example, the target item may be automatically selected by an item displayed in a designated position in a display region displaying one or more items. The target item may be selected in accordance with a preset reference on the basis of attribute information such as a file name of an item, a file type, a file extension, etc. The electronic device 100, according to an embodiment of the present disclosure may support adding the target item to the selected group only through a user input selecting the group, thereby making faster, simpler and more convenient item management.

The communication unit 110 supports a communication function of the electronic device 100. The communication unit 110 is added in case the electronic device 100 is a device supporting the communication function. Accordingly, in case the electronic device 100 of the present disclosure does not support a communication function, the communication unit 110 may be omitted from the electronic device 100. According to an embodiment of the present disclosure, the communication unit 110 may be in a form of a mobile communication module to support the communication function of the electronic device 100. The communication unit 110 may form a communication channel with a mobile communication system and support signal transmission/reception for performing the mobile communication function of the electronic device 100. For example, the communication unit 110 may support at least one of a voice service, an image service, and a data service with the mobile communication system.

The communication unit 110 according to an embodiment of the present disclosure may support an item reception function. The communication unit 110 may receive items in real-time from a web server or other devices, based on a web connection function or other device communication function.

The input unit 120 generates various input signals necessary for managing the electronic device 100. The input unit 120 may be comprised of various input means such as a keyboard, a keypad, a key button, etc. in accordance with the electronic device 100.

According to an embodiment of the present disclosure, in case the display unit 140 is provided as a touchscreen, the input unit 120 may be constructed of a touch map outputted to the touchscreen as well. The input unit 120 may generate a user input concerning an item sorting function.

The audio processor 130 may output various audio data being set in a managing operation of the electronic device 100, audio data according to playing of an audio file stored in the storage unit 150, and audio data received from external sources. The audio processor 130 may include a speaker (SPK) and a microphone (MIC). The audio processor 130 may output various sound effects or guide sound related to sorting of items in accordance with user control or controller 160 control. For example, if one of at least one or more groups is selected, a target item may disappear from a screen, and a corresponding sound effect may be outputted. The output of the sound effect or guide sound of the audio processor 130 may be omitted in accordance with user's setting or designer's intention.

The display unit 140 provides various screen interfaces necessary for managing the electronic device 100. The display unit 140 according to an embodiment of the present disclosure may output one or more items and one or more groups stored in the storage unit 150 in accordance with the activation of an item sorting function. The display unit 140 may display at least one item among the one or more items. For example, the at least one item may be displayed different from other items in at least one of a shape, a size, and a color. In case there is a user input selecting one group while outputting the one or more items and the one or more groups, the display unit 140 may rearrange one or more items without displaying the at least one item on a screen.

According to an embodiment of the present disclosure, the display unit 140 may be a touchscreen overlapping a display panel 141 and a touch panel 143. The display panel 141 may output an image and a text, etc. corresponding to the aforementioned screens and may output at least one screen interface among the aforementioned screen interfaces. The touch panel 143 may set a touch valid region collecting touch events normally, and a touch invalid region disregarding the collected touch events in accordance with a screen outputted to the display panel 141 and forward the touch events occurring in the touch valid region to the controller 160. The touch panel 143 may set a region outputting a specific key map or key button for item sorting function activation as the touch valid region. Also, the touch panel 143 may set a first display region outputting one or more items by the item sorting function and a second display region outputting one or more groups as the touch valid region, and manage a user function related with item sorting.

The storage unit 150 may store data or application programs and algorithms, etc. which correspond to various basic operating systems necessary for managing the electronic device 100 and various user functions. Particularly, the storage unit 150 stores one or more items 151, one or more groups 153, and a sorting function program 155 for supporting an item sorting function in accordance with an embodiment of the present disclosure.

The sorting function program 155 may include a routine to output the one or more items 151 and the one or more groups 153 through the display unit 140. Also, the sorting function program 155 may include a setting routine for sensing a user input for selection of one group among the one or more groups 153, and add at least one item among the one or more items 151 to the selected group. For example, the sorting function program 155 may add an item displayed in a designated position among the one or more items to the selected group. Also, the sorting function program 155 may include a setting routine to add or delete an item. Also, the sorting function program 155 may include a routine to add or delete a group.

The one or more items 151 correspond to a text file, an image file, a video file, a moving-picture file, etc. and may include an icon, a thumbnail image, a key map, a menu, a widget, etc. The one or more items 151 may be also related to at least one function of the electronic device 100. For example, the one or more items 151 may correspond to a contact file related to a call function. The one or more items 151 may be stored in the storage unit 150 of the electronic device 100, or received from through the communication unit 110. The one or more items 151 may be outputted in an array in accordance with a preset arrangement, when being outputted to the display unit 140.The one or more groups 153 may denote a file storage and, for example, correspond to a folder.

The controller 160 controls various signal flow control, information collection and output, etc. to support an item sorting function according to an embodiment of the present disclosure.

According to an embodiment of the present disclosure, the electronic device 100 may further include additional modules. For example, the electronic device 100 may also further include modules not mentioned above, such as a short-range communication module for short-range communication, an interface for data transmission/reception in a wired communication scheme or wireless communication scheme of the electronic device 100, an Internet communication module for communicating with the Internet and performing an Internet function, and a digital broadcasting module for performing a digital broadcast reception and play function, etc. The electronic device 100 of the present disclosure may eliminate specific modules or substitute specific modules with other modules in accordance with an embodiment of the present disclosure. This will be easily understood by those having ordinary knowledge in the art.

The electronic device 100 according to an embodiment of the present disclosure may include mobile communication terminals operating in compliance with communication protocols corresponding to various communication systems. The electronic device 100 according to an embodiment of the present disclosure may include all information communication devices and multimedia devices and their appliance devices, such as a Portable Multimedia Player (PMP), a digital broadcasting player, a Personal Digital Assistant (PDA), a music player (for instance, an MP3 player), a portable game terminal, a smartphone, a notebook, and a handheld Personal Computer (PC), etc.

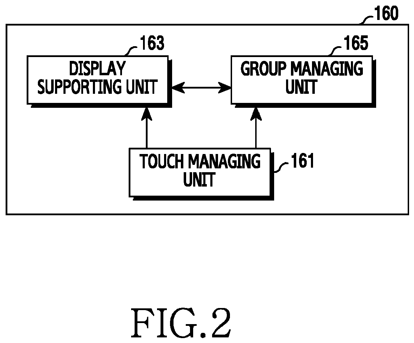

FIG. 2 is a block diagram illustrating a controller 160 according to an embodiment of the present disclosure.

Referring to FIG. 2, the controller 160 includes a touch managing unit 161, a display supporting unit 163, and a group managing unit 165.

For touch signal processing of the electronic device 100, the touch managing unit 161 determines setting of the touch panel 143, touch signal collection, and touch signal validity or invalidity and forwards user input to the display supporting unit 163 and the group managing unit 165.

The touch managing unit 161 may support a request for an item sorting function. For example, the touch managing unit 161 may provide a region on the touch screen which when touched sends a signal to the controller to execute the item management function.

According to an embodiment of the present disclosure, the touch managing unit 161 may set a touch region of a first display region outputting the one or more items 151 and set a touch region of a second display region outputting the one or more groups 153 in accordance with the item sorting function. The touch managing unit 161 may sense a user input generated in the first display region and forward the sensed user input to the display supporting unit 163. For example, the touch managing unit 161 may sense a user input for a scroll function in the first display region and forward the sensed user input to the display supporting unit 163. Also, the touch managing unit 161 may sense a user input for group selection in the second display region and forward the sensed user input to the display supporting unit 163 and the group managing unit 165.

According to an embodiment of the present disclosure, the touch managing unit 161 may set a touch region of a key map corresponding to the one or more groups 153. The key map may support selecting a group for adding at least one target item. For example, each of the one or more groups 153 may be outputted to the key map of an icon and the touch managing unit 161 may set a touch region of each key map. The touch managing unit 161 may sense a user input for selecting the key map and forward the sensed user input to the display supporting unit 163 and the group managing unit 165.

According to an embodiment of the present disclosure, the touch managing unit 161 may set a touch region of a key map for deleting or adding an item or group in accordance with a called item sorting function. The touch managing unit 161 may sense a user input for selecting the key map, and forward the sensed user input to the display supporting unit 163 and the group managing unit 165.

The group managing unit 165 may operate in accordance with the touch managing unit 161. For example, the group managing unit 165 may receive a user input for selecting a key map corresponding to a group from the touch managing unit 161 and add at least one item to the selected group. Also, the group managing unit 165 may receive a user input for selecting a key map corresponding to group addition from the touch managing unit 161 and add a new group. Also, the group managing unit 165 may receive a user input for selecting a key map corresponding to item deletion from the touch managing unit 161 and delete a corresponding item from the one or more items 151.

According to an embodiment of the present disclosure, the group managing unit 165 may upon receiving a user input, execute an item management operation (e.g., addition of at least one item to a group, group addition, group deletion, item addition, item deletion, etc.) received from the touch managing unit 161. The group managing unit 165 may collectively process a plurality of item management operations received from the touch managing unit 161 as well. The group managing unit 165 may define and record an operation dependent on a user input received from the touch managing unit 161 as a task, and collectively process one or more tasks. For example, the group managing unit 165 may collectively process one or more tasks corresponding to user input from the touch managing unit 161.

The display supporting unit 163 may operate in accordance with the touch managing unit 161. For example, the display supporting unit 163 may receive a user input corresponding to an item sorting function from the touch managing unit 161 and provide the first display region with one or more items 151 and the second display region with the one or more groups 153 through the display unit 140. The display supporting unit 163 may output a key map, a menu, etc. corresponding to the item sorting function.

The display supporting unit 163 may perform the outputting of the one or more items 151 and the outputting of the one or more groups 153 in accordance with the group managing unit 165. For example, if receiving information about the one or more items 151 and the one or more groups 153 from the group managing unit 165, the display supporting unit 163 may output the one or more items 151 and the one or more groups 153 to the display unit 140.

According to an embodiment of the present disclosure, the display supporting unit 163 may distinguish and display at least one item among the one or more items 151. For example, the display supporting unit 163 may display at least one item different from other items in at least one of a shape, a size, and a color.

The display supporting unit 163 may receive a user input for item movement from the touch managing unit 161, and change display positions of the one or more items 151. For example, the display supporting unit 163 may receive a user input for a scroll function from the touch managing unit 161 and scroll the one or more icons 151 in a corresponding direction.

The display supporting unit 163 may receive a user input for group selection from the touch managing unit 161 and delete at least one item from a screen of the display unit 140. The display supporting unit 163 may display rearranged items after deleting the at least one item from the screen.

An electronic device according to an embodiment of the present disclosure may include a display unit for displaying one or more items in a first display region of a screen and displaying one or more groups in a second display region of the screen and a controller for sensing a user input for selection of one group among the one or more groups and adding at least one item among the one or more items to the selected group.

The controller 160 of the electronic device according to an embodiment of the present disclosure may add an item displayed in a designated position among the one or more items to the selected group.

The controller 160 of the electronic device according to an embodiment of the present disclosure may delete the at least one item from the first display region.

The controller 160 of the electronic device according to an embodiment of the present disclosure may display at least one other item in a position in which the at least one item is deleted from the first display region.

The controller 160 of the electronic device according to an embodiment of the present disclosure may display to distinguish the at least one item from other items.

The controller 160 of the electronic device according to an embodiment of the present disclosure may display the at least one item different from other items in at least one of a shape, a size, and a color.

The controller 160 of the electronic device according to an embodiment of the present disclosure may sense a second user input, and change display positions of the one or more items.

In the electronic device 100 according to an embodiment of the present disclosure, the second user input may include a touch input corresponding to a flicking gesture on the first display region.

In the electronic device 100 according to an embodiment of the present disclosure, the user input may include a touch input corresponding to a tap gesture to the group displayed in the second display region.

The controller 160 of the electronic device according to an embodiment of the present disclosure may sense a third user input, add a new group, and display the added group in the second display region.

The controller 160 of the electronic device according to an embodiment of the present disclosure may define a task for adding the at least one item to the selected group and if sensing a fourth user input, execute the defined task.

The above description has been made for the electronic device 100 according to an embodiment of the present disclosure. An item sorting method of the electronic device 100 will be described below in more detail with reference to the drawings.

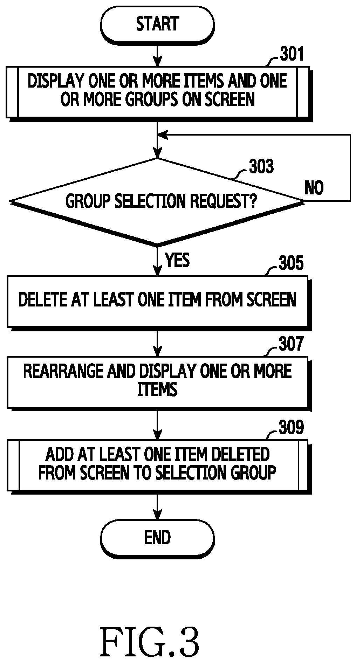

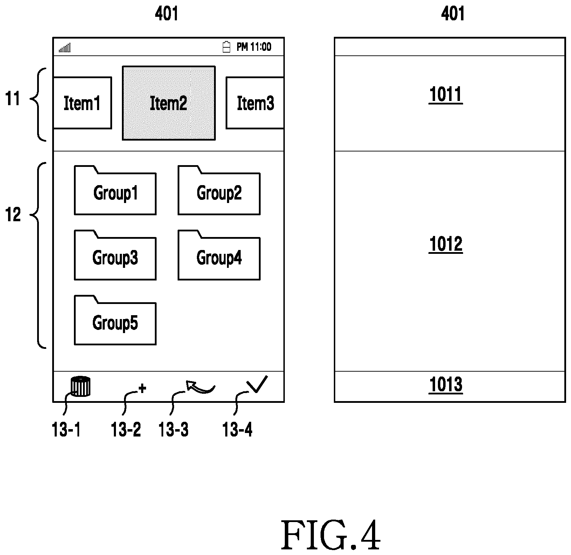

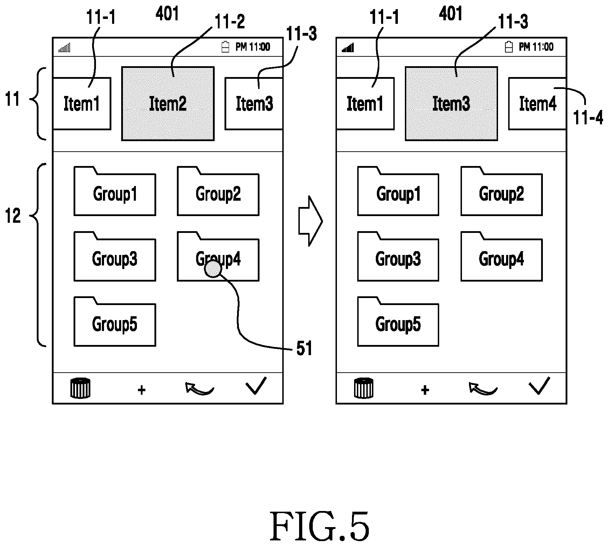

FIG. 3 is a flowchart illustrating an item sorting operation of an electronic device according to an embodiment of the present disclosure. FIGS. 4 and 5 are diagrams illustrating the item sorting method according to an embodiment of the present disclosure.

Referring to FIG. 3 and FIG. 4, according to an embodiment of the present disclosure, in step 301, the controller 160 may display one or more items 11 and one or more groups 12 on the screen 401. The controller 160 may distinguish a first display region 1011 outputting the one or more items 11 and a second display region 1012 outputting the one or more groups 12. For example, the first display region 1011 may be arranged at an upper part of the screen 401, and the second display region 1012 may be arranged at a lower part of the screen 401.

According to an embodiment of the present disclosure, the controller 160 may arrange the one or more items 11 in various arrangements. For example, the one or more items 11 may be arranged in one row or the one or more items 11 may be arranged in a plurality of columns or a plurality of rows. Also, the controller 160 may restrict the number of the items 11 displayed in the first display region 1011.

According to an embodiment of the present disclosure, the controller 160 may arrange the one or more groups 12 in various arrangements. For example, the one or more groups 12 may be arranged in rows and columns. Also, the controller 160 may restrict the number of groups 12 displayed in the second display region 1012.

According to an embodiment of the present disclosure, the controller 160 may display a third display region (e.g., a toolbar display region) 1013 displaying at least one key map on the screen 401. The controller 160 may arrange the first display region 1011, the second display region 1012, and the third display region 1013 in a user friendly manner. For example, the second display region 1012 may be arranged between the first display region 1011 and the third display region 1013. The controller 160 may display a key map 13-1 for item deletion, a key map 13-2 for group addition, a key map 13-3 for canceling a previous operation and a key map 13-4 for storage in the third display region 1013.

According to an embodiment of the present disclosure, the controller 160 may distinguish and display at least one item corresponding to a predefined preference among the one or more items 11 displayed in the first display region 1011. For example, the controller 160 may display the target item different from other items in at least one of a shape, a size, and a color. The controller 160 may display the target item different from other items by appending an additional image to the target item as well. For example, a target item Item2 11-2 located in a designated position, for example, in a middle portion of the first display region 1011 may be displayed as a larger size than other items Item1 11-1 and Item3 11-3 at different positions. The controller 160 may control the display to bring the target item into view within the first display region 1011, thereby indicating that the target item is an object to add to a selected group. In an embodiment of the present disclosure, the target item may be automatically chosen as a sorting object although the item to add to the group is not separately selected through a user input. The controller 160 may distinguish and display the target item, thus providing an indication of the selection of the group that is a destination to which the target item is to be added.

According to an embodiment of the present disclosure, in step 303, if there is a request for group selection, the controller 160 senses the request. The request for group selection may take place through the input unit 120. For example, the request for group selection may be input by the touch input corresponding to a tap gesture on a group displayed in the second display region 1012.

According to an embodiment of the present disclosure, in step 305, the controller 160 deletes at least one item among the one or more items 11 from the screen 401. For example, the controller 160 may delete the target item 11-2 displayed in the designated position among the one or more items 11 displayed in the first display region 1011, from the screen 401.

According to an embodiment of the present disclosure, in step 307, the controller 160 rearranges and displays one or more items 11 after deleting the at least one item from the screen 401. The controller 160 may rearrange after deleting the target item, the items within a range not exceeding a defined number in the first display region 1011. For example, as illustrated, the target item 11-2 displayed in the designated position may be deleted from the first display region 1011 and the neighboring other item 11-3 may be moved to the designated position. Also, a new item 11-4 may appear and be displayed in the initial position of the moved item 11-3. The controller 160 may set the item 11-3 moved to the designated position as a new target item. The controller 160 may distinguish the newly set target item 11-3 from the other items 11-1 and 11-4 on the display as described above.

According to an embodiment of the present disclosure, in step 309, the controller 160 adds at least one item, i.e., the target item deleted from the screen 401, to the selected group.

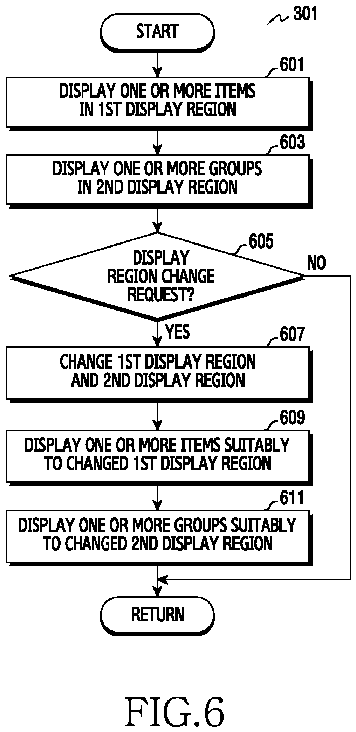

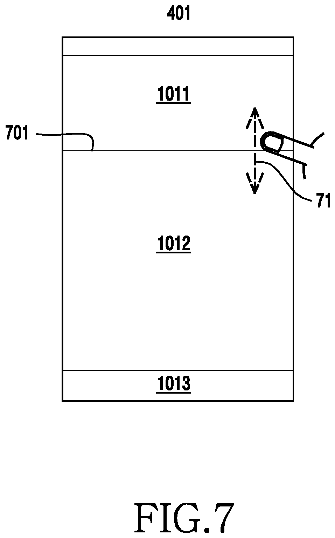

FIG. 6 is a flowchart illustrating an operation of displaying one or more items and one or more groups on a screen in FIG. 3 according to an embodiment of the present disclosure. FIGS. 7 to 9 are screen shots illustrating operation of displaying the one or more items and the one or more groups according to an embodiment of the present disclosure.

Referring to FIG. 6, in step 601, the controller 160 displays one or more items in a first display region 1011 of the screen 401. In step 603, the controller 160 displays one or more groups in a second display region 1012 of the screen 401.

According to an embodiment of the present disclosure, in step 605, if there is a display region change request, the controller 160 senses the request. In response to the display region change request, in step 607, the controller 160 changes the first display region 1011 and the second display region 1012. The display region change request may occur through the input unit 120.

According to an embodiment of the present disclosure, as illustrated in FIG. 7, the display region change request may be input by a touch input 71 starting from a divider 701 dividing the first display region 1011 and the second display region 1012. The touch input 71 may correspond to a gesture of touching and dragging starting from a first position on one side of the divider 701 to a second position on the other side of the divider 701. The controller 160 may move the divider 701 from the first position to the second position. The controller 160 may adjust a size of the first display region 1011 and a size of the second display region 1012 in accordance with a position of the divider 701. For example, as the divider 701 moves to an upper part of the screen 401, the first display region 1011 may decrease in size whereas the second display region 1012 may increase in size. In contrast, as the divider 701 moves to a lower part of the screen 401, the first display region 1011 may increase in size whereas the second display region 1012 may decrease in size.

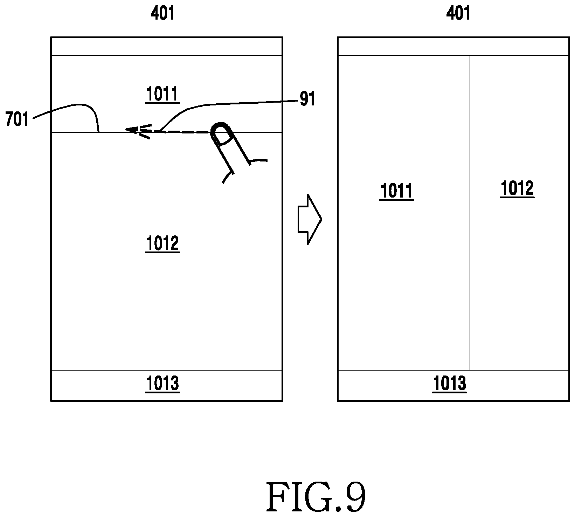

According to an embodiment of the present disclosure, as illustrated in FIG. 9, the display region change request may be input by a touch input 91 starting from a divider 701 dividing the first display region 1011 and the second display region 1012. The touch input 91 may correspond to a gesture of touching and dragging starting from a first position on one side of the divider 701 to a second position on the other side of the divider 701. The controller 160 may change the divider 701 from horizontal orientation to vertical orientation and change the orientation of the first display region 1011 and the second display region 1012 from up/down orientation to left/right orientation.

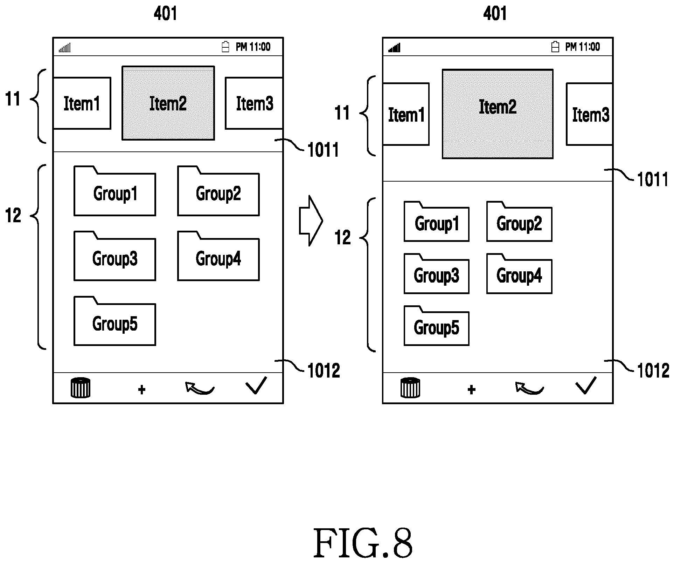

According to an embodiment of the present disclosure, in step 609, the controller 160 displays the one or more items 11 in the changed first display region 1011. For example, as illustrated in FIG. 8, when the first display region 1011 increases in size, the one or more items 11 may be displayed larger. According to an embodiment of the present disclosure, when the first display region 1011 decreases in size, the one or more items 11 may be displayed smaller.

According to an embodiment of the present disclosure, in step 611, the controller 160 displays the one or more groups 12 in the changed second display region 1012. For example, as illustrated in FIG. 8, when the second display region 1012 decreases in size, the one or more groups 12 may be displayed smaller. According to an embodiment of the present disclosure, when the second display region 1012 increases in size, the one or more groups 12 may be displayed larger.

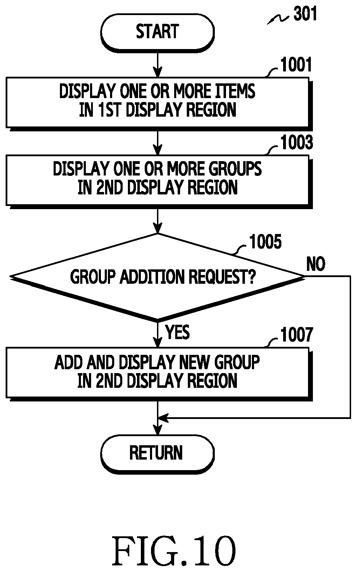

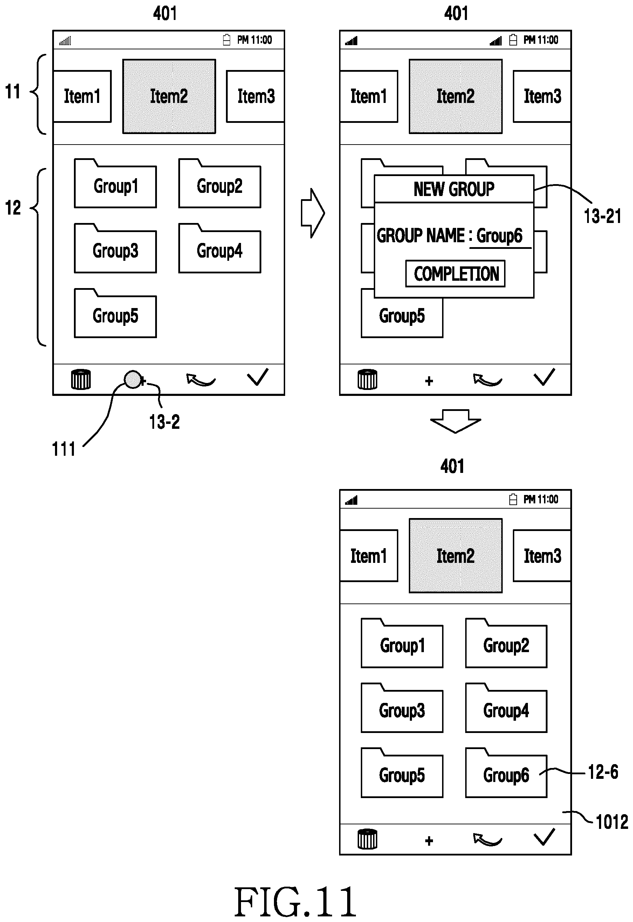

FIG. 10 is a flowchart illustrating an operation of displaying one or more items and one or more groups on a screen in FIG. 3 according to an embodiment of the present disclosure. FIG. 11 is a screen shot illustrating the operation for displaying the one or more items and the one or more groups according to an embodiment of the present disclosure.

Referring to FIG. 10, in step 1001, the controller 160 displays one or more items in a first display region 1011 of the screen 401. In step 1003, the controller 160 displays one or more groups in a second display region 1012 of the screen 401.

According to an embodiment of the present disclosure, in step 1005, if there is a group addition request, the controller 160 senses the request. In response to the group addition request, in step 1007, the controller 160 adds and displays a new group in the second display region 1012. The group addition request may occur through the input unit 120.

For example, as illustrated in FIG. 11, the group addition request may be input through a key map 13-2 provided in the third display region 1013. If there is a touch input 111 for selecting the key map 13-2, the controller 160 provides an input window 13-21 for group addition to the screen 401. If a group name is input and completed through the input window 13-21, the controller 160 displays a new group 12-6 having the inputted group name in the second display region 1012. The controller 160 may provide the screen 401 with a keyboard for inputting the group name.

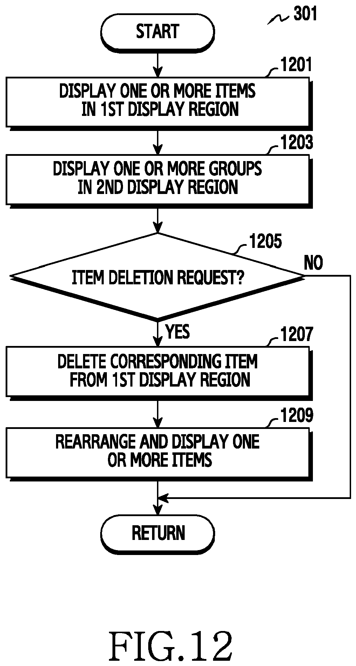

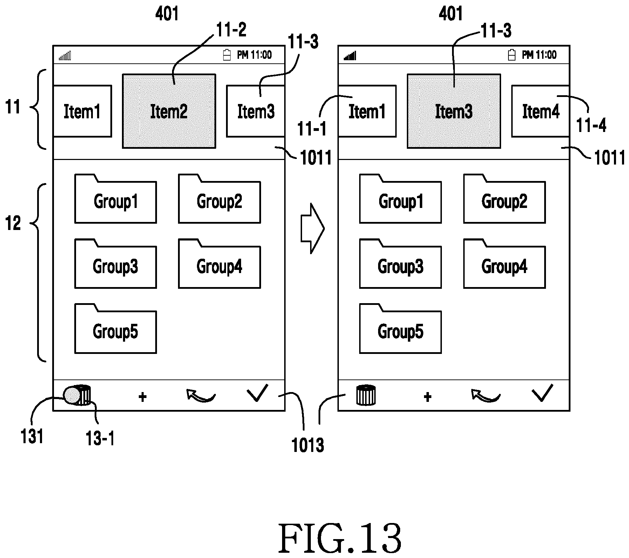

FIG. 12 is a flowchart illustrating an operation of displaying one or more items and one or more groups on a screen in FIG. 3 according to an embodiment of the present disclosure. FIG. 13 is a screen shot illustrating the operation for displaying the one or more items and the one or more groups according to an embodiment of the present disclosure.

Referring to FIG. 12, in step 1201, the controller 160 displays one or more items in a first display region 1011 of the screen 401. In step 1203, the controller 160 displays one or more groups in a second display region 1012 of the screen 401.

According to an embodiment of the present disclosure, in step 1205, if there is an item deletion request, the controller 160 senses the request. In response to the item deletion request, in step 1207, the controller 160 deletes a corresponding item, for example, a target item displayed in a designated position in the first display region 1011. The item deletion request may occur through the input unit 120.

For example, as illustrated in FIG. 13, the item deletion request may be input through a key map 13-1 provided in the third display region 1013. If there is a touch input 13-1 for selecting the key map 13-1, the controller 160 deletes a target item displayed in a designated position from the first display region 1011.

According to an embodiment of the present disclosure, the item deletion request may be also input by a gesture of dragging the touched item outside the screen 401 after touching one of the one or more items 11 displayed in the first display region 1011.

According to an embodiment of the present disclosure, in step 1209, the controller 160 rearranges and displays one or more items 11 after deleting a target item displayed in a designated position from the screen 401. For example, the target item 11-2 displayed in the designated position may be deleted from the screen 401 and the neighboring item 11-3 may be moved to the designated position. A new item 11-4 may appear and be displayed in the initial position of the moved item 11-3. The controller 160 may set the item 11-3 moved to the designated position as a new target item. The controller 160 may distinguish the newly set target item 11-3 from the other items 11-1 and 11-4 on the display as described above.

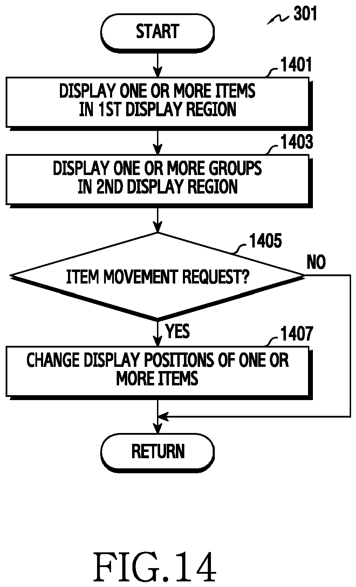

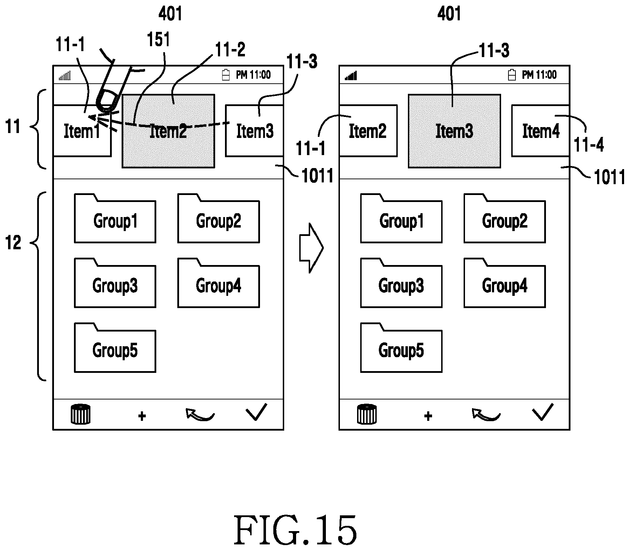

FIG. 14 is a flowchart illustrating an operation of displaying one or more items and one or more groups on a screen in FIG. 3 according to an embodiment of the present disclosure. FIG. 15 is a screen shot illustrating the operation of displaying the one or more items and the one or more groups according to an embodiment of the present disclosure.

Referring to FIG. 14, in step 1401, the controller 160 displays one or more items in a first display region 1011 of the screen 401. In step 1403, the controller 160 displays one or more groups in a second display region 1012 of the screen 401.

According to an embodiment of the present disclosure, in step 1405, if there is an item movement request, the controller 160 senses the request. The item movement request may occur through the input unit 120.

According to an embodiment of the present disclosure, as illustrated in FIG. 15, the item movement request may be input by a touch input 151 performed on the first display region 1011. The touch input 151 may correspond to a gesture (e.g., a flicking gesture) of being released after touching and dragging from a first position of the first display region 1011 to a second position on the first display region 1011. The controller 160 may set an item movement direction (or a scroll direction) in consideration of a direction in which the second position is set with respect to the first position of the touch input 151. For example, if the direction in which the second position is set with respect to the first position of the touch input 151 is to the left, the controller 160 may set the item movement direction to the left. If the direction in which the second position is set with respect to the first position of the touch input 151 is to the right, the controller 160 may set the item movement direction to the right.

According to other embodiments of the present disclosure, the item movement request may occur by pressing a specific button as well.

According to an embodiment of the present disclosure, in response to the item movement request, in step 1407, the controller 160 changes display positions of the one or more items 11. For example, as illustrated in FIG. 15, if the item movement direction set by the item movement request is to the left, the one or more items 11 displayed in the first display region 1011 is moved to the left. If the item movement direction set by the item movement request is to the right, the one or more items 11 displayed in the first display region 1011 is moved to the right. The controller 160 moves the item to a position of a neighboring item in response to the item movement request. Particularly, in response to the item movement request, the controller 160 may set an item 11-3 moved to a designated position as a new target item. As described above, the controller 160 distinguishes the newly set target item 11-3 from other items 11-1 and 11-4.

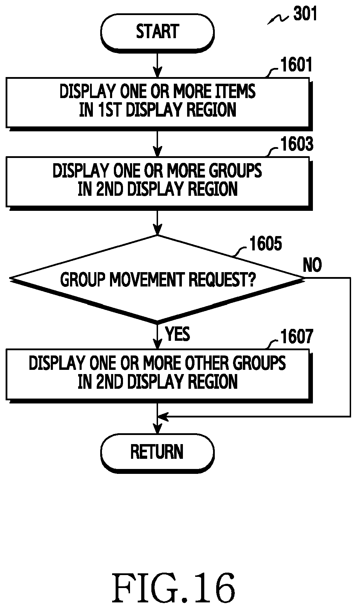

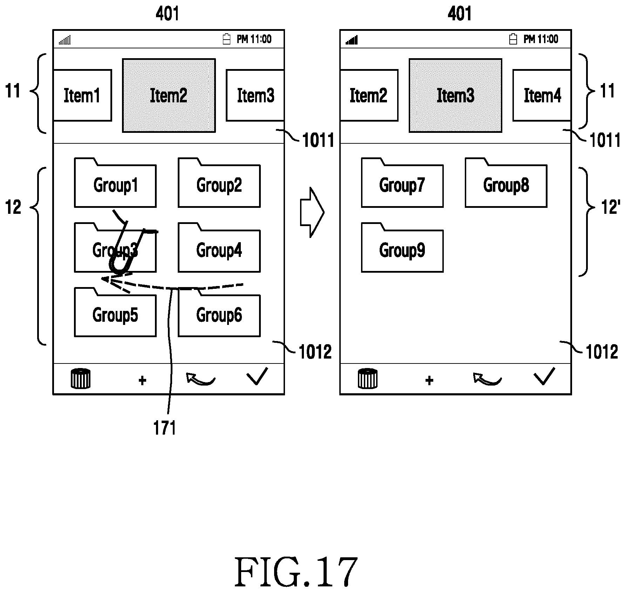

FIG. 16 is a flowchart illustrating an operation of displaying one or more items and one or more groups on a screen in FIG. 3 according to an embodiment of the present disclosure. FIG. 17 is a screen shot illustrating the operation of displaying the one or more items and the one or more groups according to an embodiment of the present disclosure.

Referring to FIG. 16, in step 1601, the controller 160 displays one or more items in a first display region 1011 of the screen 401. In step 1603, the controller 160 displays one or more groups in a second display region 1012 of the screen 401.

According to an embodiment of the present disclosure, in step 1605, if there is a group movement request, the controller 160 senses the request. The group movement request may occur through the input unit 120.

According to an embodiment of the present disclosure, as illustrated in FIG. 17, the group movement request may be input by a touch input 171 performed on the second display region 1012. The touch input 171 may correspond to a gesture (e.g., a flicking gesture) of being released after touching and dragging from a first position of the second display region 1012 to a second position on the second display region 1012. The controller 160 sets a group movement direction (or a scroll direction) in consideration of a direction in which the second position is determined with respect to the first position of the touch input 171. For example, if the direction in which the second position is determined with respect to the first position of the touch input 171 is to the left, the controller 160 sets the group movement direction to the left. If the direction in which the second position is determined with respect to the first position of the touch input 171 is to the right, the controller 160 sets the group movement direction to the right.

According to an embodiment of the present disclosure, in response to the group movement request, in step 1607, the controller 160 displays one or more other groups 12' in the second display region 1012. For example, in FIG. 17, if the group movement direction determined by the group movement request is to the left, the one or more groups 12 are deleted from the second display region 1012 by moving and disappearing to the left of the screen 401. The one or more other items 12' are displayed in the second display region 1012 by moving and appearing from the right of the screen 401. If the group movement direction determined by the group movement request is to the right, the one or more groups 12 are deleted from the second display region 1012 by moving and disappearing to the right of the screen 401. The one or more other items 12' are displayed in the second display region 1012 by moving and appearing from the left of the screen 401.

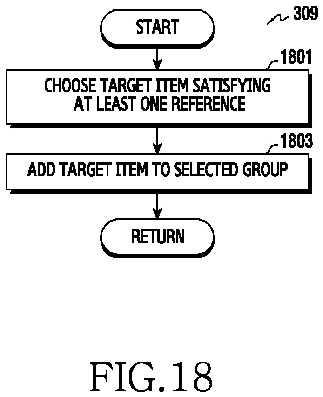

FIG. 18 is a flowchart illustrating an operation of adding at least one item deleted from a screen to a selected group in FIG. 3 according to an embodiment of the present disclosure.

Referring to FIG. 18, in step 1801, the controller 160 chooses a target item satisfying one or more references. For example, the controller 160 chooses an item displayed in a designated position as the target item. The controller 160 may also choose the target item on the basis of corresponding attribute information including a file name, a file type, a file extension, a composer, etc. In step 1803, the controller 160 adds the target item to the selected group.

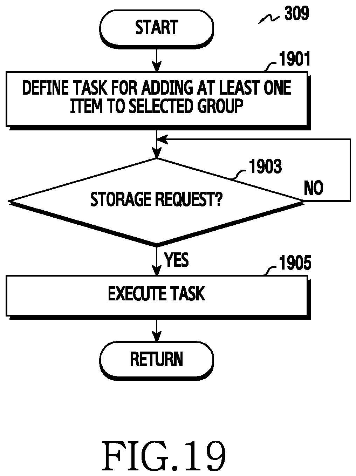

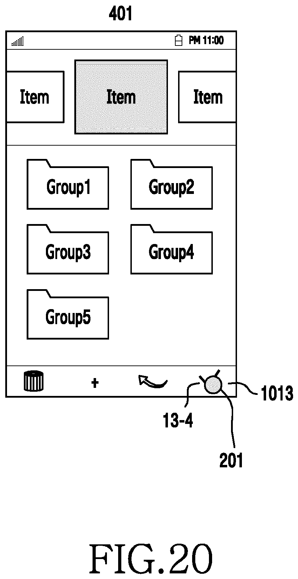

FIG. 19 is a flowchart illustrating an operation of adding at least one item deleted from a screen to a selected group in FIG. 3 according to an embodiment of the present disclosure. FIG. 20 is a screen shot illustrating the operation for adding the at least one item deleted from the screen to the selected group according to an embodiment of the present disclosure.

Referring to FIG. 19, in step 1901, the controller 160 defines a task for adding at least one item to a selected group. For example, the controller 160 may define a task for adding a target item displayed in a designated position to the selected group.

According to an embodiment of the present disclosure, in step 1903, if there is a storage request, the controller 160 senses the request. For example, as illustrated in FIG. 20, the storage request may be input by a touch input 201 for selecting a key map 13-4 provided in the third display region 1013.

According to an embodiment of the present disclosure, in response to the storage request, in step 1905, the controller 160 executes the task. If there is no storage request although the task is defined, the controller 160 performs only an operation of recording the task. If there is a storage request, the controller 160 records one or more tasks collectively. Since an actual operation of reading/writing a file is executed without several repetitions, latency is reduced.

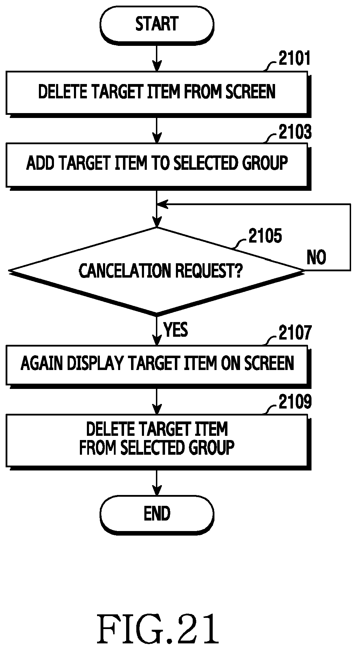

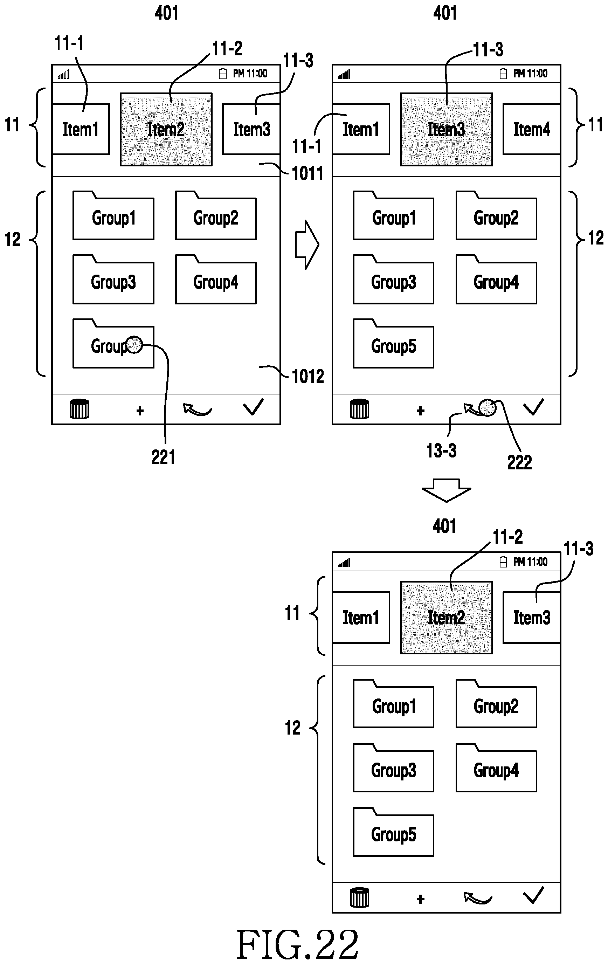

FIG. 21 is a flowchart illustrating an item sorting method of an electronic device according to an embodiment of the present disclosure. FIG. 22 is diagram illustrating the item sorting method according to an embodiment of the present disclosure.

Referring to FIG. 21, in step 2101, the controller 160 deletes a target item from a screen. In step 2103, the controller 160 adds the target item to a selected group. For example, as illustrated in FIG. 22, in response to a touch input 221 for group selection, the controller 160 deletes a target item 11-2 displayed in a designated position from the first display region 1011, to be added to the selected group.

According to an embodiment of the present disclosure, in step 2105, if there is a cancelation request, the controller 160 senses the request. For example, as illustrated in FIG. 22, the cancelation request may be input by a touch input 222 for selecting a key map 13-3 provided in the third display region 1013.

According to an embodiment of the present disclosure, in response to the cancelation request, in step 2107, the controller 160 displays the target item on the screen. For example, as illustrated in FIG. 22, in response to the cancelation request, the target item 11-2 having been deleted from the first display region 1011 in response to the group selection is displayed in the originally designated position. In step 2109, the controller 160 deletes the target item from the selected group.

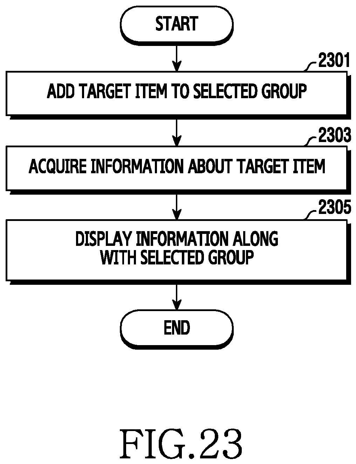

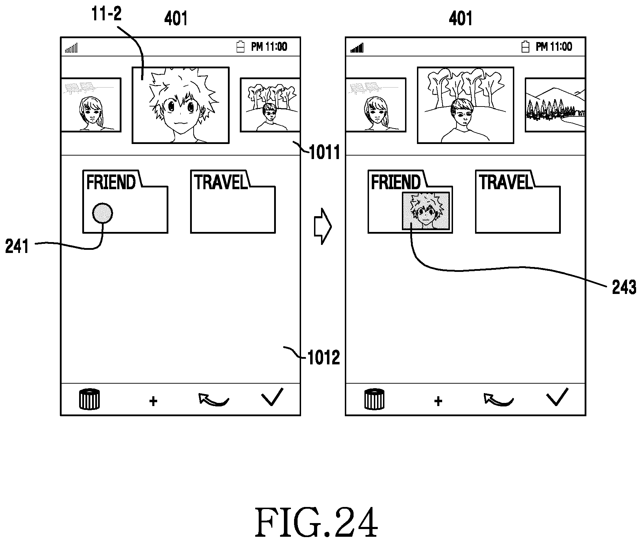

FIG. 23 is a flowchart illustrating an item sorting method of an electronic device according to an embodiment of the present disclosure. FIG. 24 is diagram illustrating the item sorting method according to an embodiment of the present disclosure.

Referring to FIG. 23, in step 2301, the controller 160 adds a target item to a selected group. For example, as illustrated in FIG. 24, in response to a touch input 241 for group selection, a target item 11-2 displayed in a designated position is added to the selected group.

According to an embodiment of the present disclosure, in step 2303, the controller 160 acquires information about the target item. The information about the item may include text information or image information. For example, as illustrated in FIG. 24, the controller 160 acquires image information for preview concerning the target item 11-2 of an image type. The controller 160 acquires text information (e.g., a keyword) from attribute information about the target item, for example, a file name, a composer, etc.

According to an embodiment of the present disclosure, in step 2305, the controller 160 displays the acquired information along with the selected group. For example, as illustrated in FIG. 24, the controller 160 displays the image information acquired from the target item 11-2 in the second display region 1012 along with the selected group.

An item management method of an electronic device according to various embodiments of the present disclosure may include the operations of displaying one or more items in a first display region of a screen and displaying one or more groups in a second display region of the screen, sensing a user input for selection of one group among the one or more groups, and adding at least one item among the one or more items to the selected group.

In the item management method of the electronic device according to various embodiments of the present disclosure, the adding operation may add an item displayed in a designated position among the one or more items to the selected group.

The item management method of the electronic device according to various embodiments of the present disclosure may further include the operation of deleting the at least one item from the first display region.

The item management method of the electronic device according to various embodiments of the present disclosure may further include the operation of displaying at least one other item in a position in which the at least one item is deleted from the first display region.

In the item management method of the electronic device according to various embodiments of the present disclosure, the displaying operation may distinguish the at least one item from other items.

In the item management method of the electronic device according to various embodiments of the present disclosure, the at least one item may be displayed differently from other items in at least one of a shape, a size, and a color.

The item management method of the electronic device according to various embodiments of the present disclosure may further include the operation of sensing a second user input and changing display positions of the one or more items.

In the item management method of the electronic device according to various embodiments of the present disclosure, the second user input may include a touch input corresponding to a flicking gesture on the first display region.

In the item management method of the electronic device according to various embodiments of the present disclosure, the user input may include a touch input corresponding to a tap gesture to the group displayed in the second display region.

The item management method of the electronic device according to various embodiments of the present disclosure may further include the operation of sensing a third user input, adding a new group, and displaying the added group in the second display region.

In the item management method of the electronic device according to various embodiments of the present disclosure, the adding operation may include the operations of defining a task for adding the at least one item to the selected group, and sensing a fourth user input and executing the defined task.

According to a method for item management and an apparatus supporting the method according to an embodiment of the present disclosure, the present disclosure may sort many items into each group simply and conveniently.

While the disclosure has been shown and described with reference to certain preferred embodiments thereof, it will be understood by those skilled in the art that various changes in form and details may be made therein without departing from the scope of the disclosure as defined by the appended claims.

## Claims

1. An item management method of an electronic device (100), the method comprising:
displaying (301), in a first display region (1011) of a screen, one or more items among a plurality of items and displaying one or more groups in a second display region (1012) of the screen;
sensing (1405) a first user input for placing a specific item among the plurality of items in a predetermined region included in the first display region by scrolling the plurality of items;
sensing (303) a second user input for selection of one group among the one or more groups; and in response to sensing the second user input, adding (309) the specific item into the selected group,
wherein the first user input is performed on the first display region, and wherein the first user input is a touch, drag, and release gesture performed on one or more of the items displayed in the first display region.

2. The method of claim 1, further comprising deleting (305) the specific item from the first display region (1011).

3. The method of claim 2, further comprising displaying (307) at least one other item in the predetermined region in which the specific item is deleted from the first display region (1011).

4. The method of claim 1, further comprising displaying the specific item in at least one of a shape, a size, and a color different from items which are not placed on the predetermined region.

5. The method of claim 1, wherein the first user input comprises a touch input corresponding to a flicking gesture on the first display region (1011).

6. The method of claim 1, wherein the second user input includes a touch input corresponding to a tap gesture to the group displayed in the second display region.

7. The method of claim 1, further comprising sensing a third user input, adding a new group, and displaying the new group in the second display region (1012).

8. The method of claim 1, wherein adding (309) the specific item into the selected group includes:
defining (1901) a task for adding the specific item into the selected group;
sensing (1903) a fourth user input; and
in response to sensing the fourth user input, executing (1905) the defined task.

9. An electronic device (100) comprising:
a display unit (140), comprising a screen configured to display, in a first display region of the screen, one or more items among a plurality of items and to display one or more groups in a second display region (1012) of the screen; and
a controller (160) configured to
sense a first user input for placing a specific item among the plurality of items in a predetermined region included in the first display region by scrolling the plurality of items,
sense a second user input for selection of one group among the one or more groups and;
in response to sensing the second user input, add (309) the specific item into the selected group,
wherein the first user input is performed on the first display region, and wherein the first user input is a touch, drag, and release gesture performed on one or more of the items displayed in the first display region.

10. The electronic device of claim 9, wherein the controller (160) is configured to delete the specific item from the first display region, and display at least one other item in the predetermined region in which the specific item is deleted from the first display region (1011).

11. The electronic device of claim 9, wherein the first user input comprises a touch input corresponding to a flicking gesture on the first display region (1011).

12. The electronic device of claim 9, wherein the controller (160) is configured to sense a third user input, add a new group, and display the new group in the second display region (1012).

## Patentansprüche

1. Verfahren zur Artikelverwaltung einer elektronischen Vorrichtung (100), wobei das Verfahren umfasst:
Anzeigen (301), in einem ersten Anzeigebereich (1011) eines Bildschirms, eines oder mehrerer Artikel unter einer Vielzahl von Artikeln und Anzeigen einer oder mehrerer Gruppen in einem zweiten Anzeigebereich (1012) des Bildschirms;
Abtasten (1405) einer ersten Benutzereingabe zum Platzieren eines speziellen Artikels unter der Vielzahl von Artikeln in einen vorbestimmten Bereich, der im ersten Anzeigebereich inbegriffen ist, durch Scrolling der Vielzahl von Artikeln;
Abtasten (303) einer zweiten Benutzereingabe zum Selektieren einer Gruppe unter der einen oder mehrerer Gruppe; und als Reaktion auf das Abtasten der zweiten Benutzereingabe, Hinzufügen (309) des speziellen Artikels in die selektierte Gruppe,
wobei die erste Benutzereingabe auf dem ersten Anzeigebereich ausgeführt wird und, wobei die erste Benutzereingabe eine Touch-, Drag- und Release-Geste ist, die an einem oder mehreren, der im ersten Anzeigebereich angezeigten Artikel ausgeführt wird.

2. Verfahren nach Anspruch 1, das ferner das Löschen (305) des speziellen Artikels aus dem ersten Anzeigebereich (1011) umfasst.

3. Verfahren nach Anspruch 2, das ferner das Anzeigen (307) mindestens eines anderen Artikels im vorbestimmten Bereich umfasst, in welchem der spezielle Artikel aus dem ersten Anzeigebereich (1011) gelöscht wird.

4. Verfahren nach Anspruch 1, das ferner das Anzeigen des speziellen Artikels in mindestens einem der Folgenden umfasst: Einer Form, einer Größe und einer Farbe, die sich von anderen Artikeln unterscheidet, die nicht auf dem vorbestimmten Bereich platziert sind.

5. Verfahren nach Anspruch 1, wobei die erste Benutzereingabe eine Touch-Eingabe umfasst, die einer schnellen Wischgeste auf dem ersten Anzeigebereich (1011) entspricht.

6. Verfahren nach Anspruch 1, wobei die zweite Benutzereingabe eine Touch-Eingabe einschließt, die einer schnellen Wischgeste auf dem ersten Anzeigebereich entspricht.

7. Verfahren nach Anspruch 1, das ferner das Abtasten einer dritten Benutzereingabe, Hinzufügen einer neuen Gruppe und das Anzeigen der neuen Gruppe im zweiten Anzeigebereich (1012) umfasst.

8. Verfahren nach Anspruch 1, wobei das Hinzufügen (309) des speziellen Artikels in die selektierte Gruppe einschließt:
Definieren (1901) einer Aufgabe zum Hinzufügen des speziellen Artikels in die selektierte Gruppe;
Abtasten (1903) einer vierten Benutzereingabe; und
als Antwort auf das Abtasten der vierten Benutzereingabe, Ausführen (1905) der definierten Aufgabe.

9. Elektronische Vorrichtung (100), umfassend:
Eine Anzeigeeinheit (140), die einen Bildschirm umfasst, der ausgelegt ist, in einem ersten Anzeigebereich des Bildschirms, einen oder mehrere Artikel unter einer Vielzahl von Artikeln anzuzeigen und eine oder mehrere Gruppen in einem zweiten Anzeigebereich (1012) des Bildschirms anzuzeigen; und
eine Steuereinheit (160), die ausgelegt ist, Folgendes zu tun:
Abtasten einer ersten Benutzereingabe zum Platzieren eines speziellen Artikels unter der Vielzahl von Artikeln in einen vorbestimmten Bereich, der im ersten Anzeigebereich inbegriffen ist, durch Scrolling der Vielzahl von Artikeln,
Abtasten einer zweiten Benutzereingabe zum Selektieren einer Gruppe unter der einen oder mehrerer Gruppen und;
als Antwort auf das Abtasten der zweiten Benutzereingabe, Hinzufügen (309) des speziellen Artikels in die selektierte Gruppe,
wobei die erste Benutzereingabe auf dem ersten Anzeigebereich ausgeführt wird und, wobei die erste Benutzereingabe eine Touch-, Drag- und Release-Geste ist, die an einem oder mehreren, der im ersten Anzeigebereich angezeigten Artikel ausgeführt wird.

10. Elektronische Vorrichtung nach Anspruch 9, wobei die Steuereinheit (160) ausgelegt ist, den speziellen Artikel aus dem ersten Anzeigebereich zu löschen und mindestens einen anderen Artikel im vorbestimmten Bereich anzuzeigen, in welchem der spezielle Artikel aus dem ersten Anzeigebereich (1011) gelöscht wurde.

11. Elektronische Vorrichtung nach Anspruch 9, wobei die erste Benutzereingabe eine Touch-Eingabe umfasst, die einer schnellen Wischgeste auf dem ersten Anzeigebereich (1011) entspricht.

12. Elektronische Vorrichtung nach Anspruch 9, wobei die Steuereinheit (160) ausgelegt ist, eine dritte Benutzereingabe abzutasten, eine neue Gruppe hinzuzufügen und die neue Gruppe im zweiten Anzeigebereich (1012) anzuzeigen.

## Revendications

1. Un procédé de gestion d'éléments d'un dispositif électronique (100), le procédé comprenant :
l'affichage (301), dans une première zone d'affichage (1011) d'un écran, d'un ou de plusieurs éléments parmi une pluralité d'éléments et l'affichage d'un ou de plusieurs groupes dans une deuxième zone d'affichage (1012) de l'écran,
la détection (1405) d'une première entrée d'utilisateur destinée au placement d'un élément spécifique parmi la pluralité d'éléments dans une zone prédéterminée incluse dans la première zone d'affichage par le défilement de la pluralité d'éléments,
la détection (303) d'une deuxième entrée d'utilisateur destinée à la sélection d'un groupe parmi les un ou plusieurs groupes, et en réponse à la détection de la deuxième entrée d'utilisateur, l'ajout (309) de l'élément spécifique au groupe sélectionné,
où la première entrée d'utilisateur est exécutée sur la première zone d'affichage, et où la première entrée d'utilisateur est un geste de contact, de glissement et de relâchement exécuté sur un ou plusieurs des éléments affichés dans la première zone d'affichage.

2. Le procédé selon la Revendication 1, comprenant en outre la suppression (305) de l'élément spécifique de la première zone d'affichage (1011).

3. Le procédé selon la Revendication 2, comprenant en outre l'affichage (307) d'au moins un autre élément dans la zone prédéterminée dans laquelle l'élément spécifique est supprimé de la première zone d'affichage (1011).

4. Le procédé selon la Revendication 1, comprenant en outre l'affichage de l'élément spécifique selon au moins une caractéristique parmi une forme, une taille et une couleur différente de celles d'éléments qui ne sont pas placés sur la zone prédéterminée.

5. Le procédé selon la Revendication 1, où la première entrée d'utilisateur comprend une entrée tactile correspondant à un geste de balayage sur la première zone d'affichage (1011).

6. Le procédé selon la Revendication 1, où la deuxième entrée d'utilisateur comprend une entrée tactile correspondant à un geste de frappe sur le groupe affiché dans la deuxième zone d'affichage.

7. Le procédé selon la Revendication 1, comprenant en outre la détection d'une troisième entrée d'utilisateur, l'ajout d'un nouveau groupe et l'affichage du nouveau groupe dans la deuxième zone d'affichage (1012).

8. Le procédé selon la Revendication 1, où l'ajout (309) de l'élément spécifique au groupe sélectionné comprend :
la définition (1901) d'une tâche destinée à l'ajout de l'élément spécifique dans le groupe sélectionné,
la détection (1903) d'une quatrième entrée d'utilisateur, et
en réponse à la détection de la quatrième entrée d'utilisateur, l'exécution (1905) de la tâche définie.

9. Un dispositif électronique (100) comprenant :
une unité d'affichage (140), comprenant un écran configuré de façon à afficher, dans une première zone d'affichage de l'écran, un ou plusieurs éléments parmi une pluralité d'éléments et à afficher un ou plusieurs groupes dans une deuxième zone d'affichage (1012) de l'écran, et
un dispositif de commande (160) configuré de façon à
détecter une première entrée d'utilisateur destinée au placement d'un élément spécifique parmi la pluralité d'éléments dans une zone prédéterminée incluse dans la première zone d'affichage par le défilement de la pluralité d'éléments,
détecter une deuxième entrée d'utilisateur destinée à la sélection d'un groupe parmi les un ou plusieurs groupes et,
en réponse à la détection de la deuxième entrée d'utilisateur, ajouter (309) l'élément spécifique au groupe sélectionné,
où la première entrée d'utilisateur est exécutée sur la première zone d'affichage, et où la première entrée d'utilisateur est un geste de contact, de glissement et de relâchement exécuté sur un ou plusieurs des éléments affichés dans la première zone d'affichage.

10. Le dispositif électronique selon la Revendication 9, où le dispositif de commande (160) est configuré de façon à supprimer l'élément spécifique de la première zone d'affichage et à afficher au moins un autre élément dans la zone prédéterminée dans laquelle l'élément spécifique est supprimé de la première zone d'affichage (1011).

11. Le dispositif électronique selon la Revendication 9, où la première entrée d'utilisateur comprend une entrée tactile correspondant à un geste de balayage sur la première zone d'affichage (1011).

12. Le dispositif électronique selon la Revendication 9, où le dispositif de commande (160) est configuré de façon à détecter une troisième entrée d'utilisateur, à ajouter un nouveau groupe et à afficher le nouveau groupe dans la deuxième zone d'affichage (1012).
